# DEMANDE DE BREVET EUROPEEN

(11) **EP 1 445 808 A1**
(43) Date de publication de la demande: **11.08.2004**
(21) Numéro de dépôt: 04290245.2
(22) Date de dépôt: 30.01.2004
(51) Int. Cl.: H01M 2/28, H01M 2/26, B22D 25/04

(54) **Moule pour préparer des barrettes et des bornes pour des batteries; dispositif pour couler de telles barrettes sur des plaques de batteries et procédé correspondant**

(30) Priorité: 06.02.2003 FR 0301424
(71) Demandeur: Delphi Technologies, Inc., Troy, MI 48098 (US)
(72) Inventeur: Fesert, Vincent, 57510 Loupperschouse (FR); Ammer, Jean-Philippe, 57910 Neufgrange (FR)
(74) Mandataire: Blot, Philippe Robert Emile

(57) **Abrégé**

Pour préparer des barrettes de connexion et des bornes d'extrémité pour des batteries, on remplit un moule, qui possède des cavités correspondant à une barrette de connexion et à une borne d'extrémité, avec du plomb fondu en une quantité suffisante pour remplir le moule, et on introduit à la fois le contenu du moule à partir du fond de celui-ci et vers le haut et des pattes retournées de plaques de batterie regroupées, de façon à réunir par fusion les pattes des plaques avec le contenu du moule avant solidification. Le moule comporte à cet effet un premier bloc de moule (44) comportant trois cavités de moule (42) alignées linéairement et débouchant sur une face supérieure du bloc, deux cavités présélectionnées parmi les trois cavités de moule étant alignées en translation de manière à être remplies par du plomb.

Application notamment à la fabrication de batteries au plomb.

## Description

La présente invention concerne des batteries au plomb et plus particulièrement un procédé et un dispositif pour introduire du plomb fondu ou un alliage de plomb dans des moules dits "pour barrettes coulées" lors de la fabrication et de l'assemblage de batteries au plomb.

On rencontre partout des batteries d'accumulation électrochimiques, en particulier des batteries d'accumulation au plomb et à l'acide sulfurique dans des applications automobiles. Ces batteries possèdent des cellules électrochimiques développant environ 2,1 volts chacune. En général six de ces cellules sont branchées en série de manière à réaliser une batterie à 12 volts connues en tant que batterie « SLI » (démarrage, éclairage, allumage), qui sont usuelles dans des systèmes automobiles.

Les éléments de cellule comprennent une série de plaques positives et négatives alternées, entre lesquelles sont disposés des séparateurs. Les connexions électriques entre les plaques positives, ainsi qu'entre les plaques négatives, sont formées de façon typique par une barrette qui raccorde entre elles des pattes individuelles. Les barrettes sont formées d'une grande variété de plomb fondu ou de façon plus usuelle d'alliages à base de plomb.

Différentes machines ont été développées et utilisées au fil des ans pour couler les barrettes sur les éléments de cellules d'une manière semi-continue. De telles machines sont souvent désignées sous l'expression "machine pour barrettes coulées" ou « COS ». D'une manière générale, les machines pour barrettes coulées nécessitent l'introduction de l'élément de cellule avec sa face supérieure tournée vers le bas dans un moule pour former la barrette. Les éléments en forme de pattes des plaques correspondantes sont par conséquent disposés dans un moule contenant le plomb fondu ou l'alliage de plomb fondu requis, et on solidifie le matériau fondu. Puis on retire l'élément de cellule avec la barrette coulée en position.

De façon typique dans des machines COS, des plaques de batterie et des séparateurs, qui sont empilés pour une pluralité de cellules constituant une batterie d'accumulateur au plomb, comportent des pattes de connexion sur respectivement les plaques positives et négatives de chaque cellule, qui sont interconnectées par une barrette coulée. Un plot, qui forme une borne ou qui réalise une connexion entre cellules, est agencé en tant que partie intégrante de chaque barrette. Ces opérations de coulée sont réalisées simultanément avec les cellules retournées, mais de façon alternative les cellules peuvent être orientées telles qu'elles sont dans la structure de batterie terminée. Les éléments de cellule empilés sont serrés, les pattes des plaques s'étendant vers le bas. Une pluralité de cavités de moule orientées correctement (par exemple 6 cavités pour une batterie de 12 V) sont préchauffées, puis le plomb fondu est introduit ou s'écoule dans chaque cavité de moule. On dispose les ensembles de cellules serrées de manière à immerger une partie de la patte de liaison de plaque prévue sur chaque plaque, dans la masse fondue, dans une cavité appropriée pour barrette de connexion. Ensuite on refroidit les cavités, par exemple en faisant circuler de l'eau à l'intérieur du corps du moule, puis, lorsque les barrettes et les plots moulés sont solidifiés de façon adéquate, on les retire du moule avec les plaques qui sont réunies par fusion.

La dépense concernant le moule est un facteur important dans des machines du type considéré. Il est difficile d'obtenir des pièces coulées appropriées à partir desquelles des formes de moules puissent être produites. Une variété d'agencements de cellules et de bornes requis pour des batteries au plomb présentent un agencement de moule compliqué. En outre l'opération de coulée simultanée décrite précédemment requiert des moules très coûteux et de grandes machines de coulée.

Ainsi, le but de la présente invention est d'améliorer des ensembles de moule pour des machines de coulée de barrettes ou de plots de batteries, ainsi que de réduire la durée du cycle des machines de coulée de barrettes et de plots de batteries, tout en réduisant le coût et la taille de l'ensemble de moulage et des machines de coulée.

L'invention a pour objet un moule pour préparer des barrettes de connexion et des bornes d'extrémité pour des batteries au plomb, par remplissage du moule, qui possède des cavités correspondant à une barrette de connexion et à une borne d'extrémité, avec du plomb fondu en une quantité suffisante pour remplir le moule, et par introduction à la fois du contenu du moule à partir du fond de celui-ci vers le haut, et de pattes retournées de plaques de batterie regroupées, de façon à réunir par fusion les pattes des plaques avec le contenu du moule avant solidification, lequel moule comporte un premier bloc de moule comportant trois cavités de moule alignées linéairement et débouchant sur une face supérieure du bloc, deux cavités présélectionnées parmi les trois cavités de moule étant alignées en translation de manière à être remplies par du plomb.

Suivant d'autres caractéristiques de ce moule, prises isolément ou selon toutes les combinaisons techniquement possibles :
- les trois cavités comprennent une première cavité pour barrette configurée de manière à former une première barrette, une seconde cavité pour barrette configurée de manière à former une seconde barrette et une troisième cavité pour borne en forme de plot configurée de manière à former une première borne en forme de plot ;
- les première et seconde barrettes sont configurées de manière à comporter une languette de prolongement s'étendant essentiellement perpendiculairement aux barrettes, la languette de prolongement de la première barrette s'étendant à partir d'un côté de barrette opposé à celui à partir duquel s'étend la languette de prolongement de la seconde barrette ;
- les première et seconde barrettes sont contiguës dans le bloc de moule ;
- le moule comporte en outre un second bloc de moule comprenant trois cavités, qui comprennent une quatrième cavité pour barrette configurée de manière à former une troisième barrette, une cinquième cavité pour barrette configurée de manière à former une quatrième barrette et une sixième cavité pour borne en forme plot configurée de manière à former une seconde borne en forme de plot, les troisième et quatrième barrettes étant contiguës et comprenant chacune une languette de prolongement suivant des orientations respectivement opposées pour les premier et second blocs de moule ;
- les premier et second blocs de moule fournissent quatre configurations différentes de connecteurs à barrette et à borne ;
- six éléments de cellule sont fabriqués en trois cycles en utilisant les premier et second blocs de moule avec deux machines de moulage ; et
- une source de plomb fondu est une machine d'injection de plomb.

L'invention a également pour objet un dispositif pour couler des éléments sur des plaques de batterie d'accumulation, qui comporte :
- une source de plomb fondu,
- un premier bloc de moule comportant trois cavités de moule alignées linéairement et débouchant sur une face supérieure du bloc, deux cavités sélectionnées parmi les trois cavités de moule étant remplies par du plomb,
- des moyens pour translater le bloc de moule de façon à aligner chacune des deux cavités présélectionnées avec la source de plomb fondu, et
- des moyens pour amener le bloc de moule à coopérer avec un groupe de plaques de batterie pour immerger des pattes du groupe dans les deux cavités présélectionnées.

Suivant d'autres caractéristiques de ce dispositif, prises isolément ou selon toutes les combinaisons techniquement possibles :
- les trois cavités comprennent une première cavité pour barrette configurée pour former une première barrette, une seconde cavité pour barrette configurée pour former une seconde barrette et une troisième cavité pour borne en forme de plot configurée de manière à former une première borne en forme de plot ;
- les première et seconde barrettes sont configurées de manière à comporter une languette de prolongement qui s'étend essentiellement perpendiculairement à ces barrettes, la languette de prolongement de la première barrette s'étendant à partir d'une extrémité de barrette opposée à celle à partir de laquelle s'étend la languette de prolongement de la seconde barrette ;
- les première et seconde barrettes sont contiguës dans le bloc de moule ;
- ce dispositif comporte un second bloc de moule comprenant trois cavités qui comportent une quatrième cavité pour barrette configurée de manière à former une troisième barrette, une cinquième cavité pour barrette configurée de manière à former une quatrième barrette et une sixième cavité pour borne en forme de plot configurée de manière à former une seconde borne en forme de plot, les troisième et quatrième barrettes étant contiguës et comprenant chacune une languette de prolongement suivant des orientations respectivement opposées pour les premier et second blocs de moule ;
- les premier et second blocs de moule forment quatre configurations différentes de connecteurs à barrette et à borne ;
- six éléments de cellules sont fabriqués en trois cycles en utilisant les premier et second blocs de moule avec les deux machines de moulage ; et
- la source de plomb fondu est une machine d'injection de plomb.
   L'invention a en outre pour objet un procédé pour couler des éléments sur des plaques de batteries d'accumulation, qui comporte des étapes consistant à
- prévoir une source de plomb fondu,
- recevoir un premier bloc de moule comportant trois cavités de moule alignées linéairement et débouchant sur une face supérieure du bloc, deux cavités sélectionnées parmi les trois cavités de moule étant remplies par du plomb,
- translater le bloc de moule pour aligner chacune des deux cavités présélectionnées avec la source de plomb fondu, et
- soulever le bloc du moule en direction d'un groupe de plaques de batterie pour immerger des pattes du groupe dans les deux cavités présélectionnées.

Suivant d'autres caractéristiques de ce procédé, prises isolément ou salon toutes les combinaisons techniquement possibles :
- les trois cavités comprennent une première cavité pour barrette configurée de manière à former une première barrette, une seconde cavité pour barrette configurée de manière à former une seconde barrette et une troisième cavité pour borne en forme de plot configurée de manière à former une première borne en forme de plot ;
- les première et seconde barrettes comportent une languette de prolongement qui s'étend essentiellement perpendiculairement à ces barrettes, la languette de prolongement de la première barrette s'étendant à partir d'une extrémité de barrette opposée à celle à partir de laquelle s'étend la languette de prolongement de la seconde barrette ;
- des première et seconde barrettes sont contiguës dans le bloc de moule ;
- il comporte en outre un second bloc de moule comprenant trois cavités qui comportent une quatrième cavité pour barrette configurée de manière à former une troisième barrette, une cinquième cavité pour barrette configurée de manière à former une quatrième barrette et une sixième cavité pour borne en forme plot configurée de manière à former une seconde borne en forme de plot, les troisième et quatrième barrettes étant contiguës et chaque barrette comprenant une languette de prolongement suivant des orientations respectivement opposées pour les premier et second blocs de moule ;
- les premier et second blocs de moule forment quatre configurations différentes de connecteurs à barrette et à borne ;
- il comprend en outre une étape d'utilisation des premier et second blocs de moule avec deux machines de moulage, six éléments de cellule étant fabriqués en trois cycles ;
- la source de plomb fondu est une machine d'injection de plomb ; et
- les éléments de cellule produits sont disposés dans un boîtier de batterie, dans lequel chaque languette de prolongement est alignée avec des trous formés dans des parois de séparation des cellules à l'intérieur du boîtier de la batterie, chaque languette de prolongement étant alignée avec une autre languette de prolongement d'une cellule contiguë pour réunir électriquement les languettes s'étendant au niveau des cellules contiguës de manière à former une connexion en série entre les cellules de la batterie.

D'autres caractéristiques et avantages de la présente invention ressortiront de la description donnée ci-après, prise en référence aux dessins annexés, qui sont donnés à titre d'exemple sans aucun caractère limitatif et sur lesquels les mêmes chiffres de référence sont utilisés sur les différentes figures, et parmi lesquels :
- la figure 1 est une vue en perspective schématique partiellement arrachée des éléments d'actionnement d'un dispositif dans lequel des ensembles de moule de l'exemple décrit sont utilisés ;
- la figure 2A est une vue en plan d'un exemple de moule comportant trois cavités permettant d'y couler du plomb pour former par coulée des barrettes, dans une première configuration, pour une cellule d'une batterie ;
- la figure 2B est une vue en plan d'un exemple de moule complémentaire de la figure 2A comportant trois cavités qui permettent de couler des barrettes dans une seconde configuration, pour une autre cellule de la batterie ;
- la figure 2C est une vue en élévation latérale du moule de la figure 2A représentant des brides en forme de U, dans la première configuration, s'étendant à partir de barrettes formées par les cavités ;
- la figure 2D est une vue en élévation latérale du moule de la figure 2B représentant des brides en forme de U qui s'étendent à partir de barrettes formées par les cavités ; et
- la figure 3 est une vue en plan d'une batterie à 12 V comportant six cellules à barrettes similaires à celles formées par les moules représentés sur les figures 2A à 2D, et montrant une liaison électrique entre des cellules contiguës au moyen d'une connexion de bornes à polarités opposées avec un connecteur de liaison entre cellules.

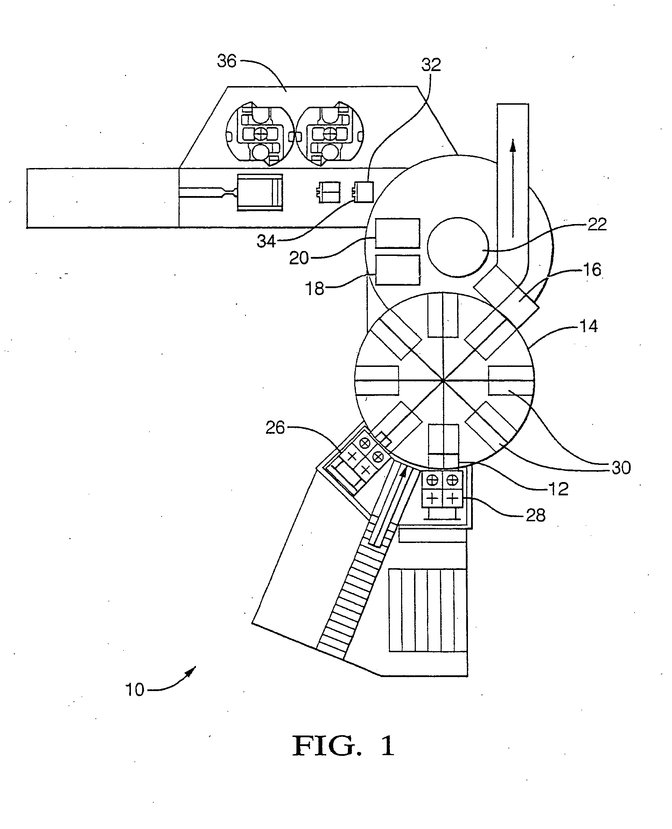

Une petite machine de formation de barrettes coulées « COS », dans laquelle un ensemble de moule 12 ici décrit est utilisé, est représentée d'une manière générale en étant désignée par la référence 10 sur la figure 1, et comprend un poste de coulée 14 comportant un poste de transfert 16 pour le déchargement de cellules de batterie au plomb provenant de l'ensemble de moule 12, un poste 20 de brunissage de pattes, un poste 18 d'application de flux pour les pattes, et un mécanisme de transfert 22 en liaison opérationnelle avec des réceptacles rotatifs 30 disposés sur une partie périphérique du poste de coulée 14. Le mécanisme de transfert 22 permet un transfert pour l'exécution des opérations de brunissage et d'application de flux dans les postes 20 et 18, ainsi qu'un chargement des réceptacles rotatifs 30. En outre, le mécanisme de transfert 22 décharge les réceptacles rotatifs 30 pour des traitements ultérieurs des éléments de cellule de batterie produits au niveau du poste de transfert 16. Le poste de coulée 14 est en outre relié fonctionnellement à deux postes de moulage 26, 28. Des commandes non représentées pour la machine COS 10 sont actionnées de façon automatique ou semi-automatique pour faire avancer les ensembles de moules 12 produits dans le poste de coulée 14 et ainsi les soumettre à d'autres processus, comme par exemple un refroidissement, par rotation du poste de coulée dans le sens des aiguilles d'une montre par exemple. Le mécanisme de transfert 22 transfère les éléments à travers le poste de brunissage et le poste d'application de flux, puis les envoie au poste de coulée 14. Le poste de coulée 14 est configuré de manière à recevoir un ensemble de moule 12 pour le faire avancer jusqu'aux postes de moulage 26, 28 du poste de coulée 14 selon un cadencement et une séquence corrects pour réaliser la coulée de barrettes et de bornes formant les plots des cellules sur des pattes 34 de plaques de batterie positives et négatives 32 disposées dans l'ensemble de moule 12, pour chaque cellule, de sorte que ces pattes respectives se raccordent électriquement et mécaniquement et que des barrettes de connexion entre cellules ou des plots formant les bornes de la batterie (non représentés sur la figure 1) soient formés dans une relation spatiale appropriée pour leur positionnement ultérieur dans le boîtier de la batterie.

La machine COS inclut des moyens d'entraînement non représentés pouvant agir de manière à faire tourner le poste de coulée 14. Des empilages de plaques de batterie 32 positives et négatives imbriquées comportant des séparateurs appropriés sont montés de telle sorte que leurs pattes 34 s'étendent vers le bas et sont serrées entre elles, de façon typique par un opérateur de la machine qui actionne des commandes manuelles. Lorsque toutes les plaques 32 sont alignées et empilées, l'empilage est soulevé par le mécanisme de transfert 22 et avance jusqu'à un niveau donné pour porter les pattes 34 au niveau d'une brosse de brunissage rotative dans le poste de brunissage 20. La pile avance ensuite jusqu'à une position située au-dessus du poste d'application de flux 18, est arrêtée et abaissée pour que les pattes 34 soient immergées dans une solution de flux. Ensuite on soulève la pile et on la laisse s'égoutter.

En un moment approprié du cycle de commande de la machine, l'ensemble de moule est pré-conditionné pour la coulée. On fait d'abord avancer la pile dans son état soulevé à partir du poste d'application de flux 18 jusqu'au poste de coulée 14. Dans une forme de réalisation préférée, le mécanisme de transfert 22 est un robot configuré de manière à fournir les fonctions de transfert appropriées mentionnées plus haut. Le poste de coulée 14 tourne en direction des postes de moulage 24, 26 de manière à immerger les pattes 34 dans l'ensemble de moule 12 pour injecter du plomb fondu dans des cavités du moule sélectionnées pour former des barrettes de connexion et des bornes en forme de plots.

On notera que, bien qu'on parle d'une injection de plomb, on peut utiliser d'autres procédés pour remplir les cavités de moule. Par exemple, on remplit facultativement, l'ensemble de moule par immersion ou bien par introduction sélective de plomb fondu dans les cavités de moule, sans qu'il n'y ait là aucune limitation.

Un réfrigérant circule dans des chemises situées autour des cavités de moule de manière à refroidir les plots et les barrettes et, lorsqu'une température appropriée a été atteinte, le plot et la barrette coulés sont extraits de leur moule grâce à l'actionnement simultané d'extracteurs entraînés par une plaque de dégagement et, en synchronisme, de l'élévateur de la pile. On fait alors tourner l'unité de cellules comportant les pattes et les bornes en forme de plots par un des réceptacles 30 du poste de transfert 16 dans lequel par exemple l'opérateur de la machine libère la cellule moulée à partir de l'ensemble de moule 12. Une cellule moulée est alors par exemple insérée dans un boîtier dans lequel les cellules individuelles sont réunies ensuite électriquement et mécaniquement par l'intermédiaire des barrettes, pour former des connexions entre cellules.

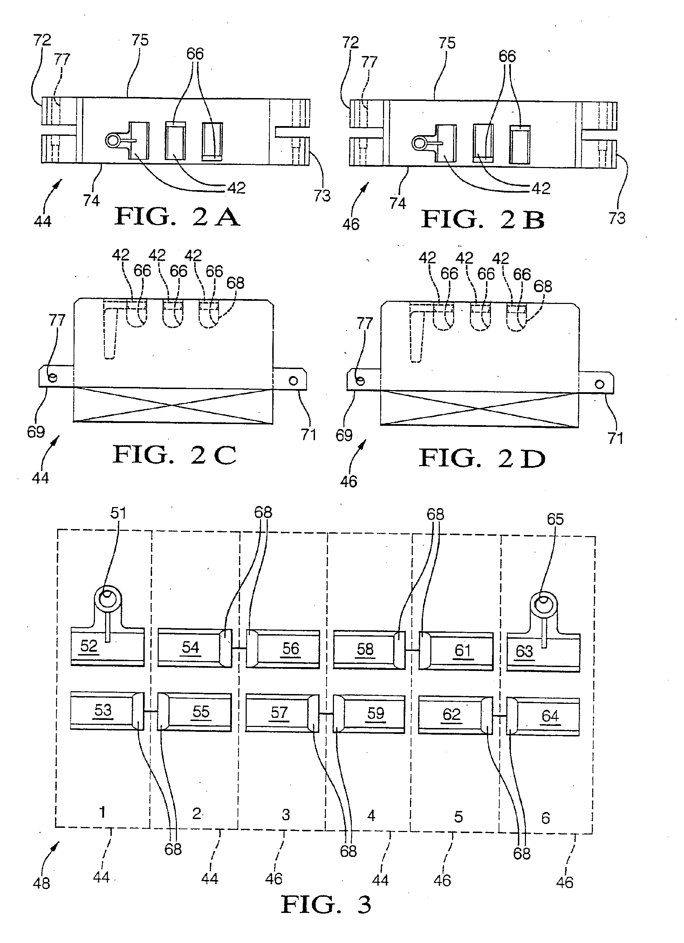

Le processus de coulée décrit utilise une technique de remplissage de moules représentés les figures 2A à 2D. Deux configurations différentes d'ensembles de moule 44 et 46 sont représentées pour l'injection du plomb fondu dans deux parmi trois cavités 42 pour chaque ensemble de moule 12. Les figures 2C et 2D sont des coupes transversales en élévation latérale des ensembles de moules 44 et 46 représentés respectivement sur les figures 2A et 2B. Chaque moule fournit une cellule d'une batterie (non représentée). Lorsqu'il est souhaitable de réaliser l'injection dans les cavités de moule 42, une machine d'injection de plomb (non représentée), au niveau des postes de moulage 26, 28, est utilisée pour injecter du plomb fondu dans deux cavités de moule 42, de préférence simultanément pour réduire la durée du cycle.

On notera à partir de la description précédente qu'un degré substantiel de précision pour le contrôle des conditions thermiques est requis dans le poste de coulée 14. Les cavités doivent être suffisamment refroidies pour solidifier le métal pour son extraction sous la forme de barrettes et éventuellement sous la forme d'une borne en forme de plot. De la sorte, le métal fondu présent dans les cavités ne peut pas être suffisamment chaud au moment où les pattes 34 sont immergées, au point que ces dernières affectent de façon nuisible les ensembles de cellule en chevauchement, par exemple par réunion par fusion des plaques 32, des séparateurs entre les plaques ou des pattes 34 au-dessus de la zone d'immersion.

Une forme d'un ensemble de moule 12 pris à titre d'exemple, et qui fournit deux configurations différentes pour une cellule, est représentée d'une manière générale en 44 sur les figures 2A et 2C. Une seconde forme d'un ensemble de moule pris à titre d'exemple, qui fournit deux configurations alternatives supplémentaires pour une cellule, est représentée d'une manière générale en 46 sur les figures 2B et 2D. En remplissant deux cavités contiguës 42 parmi les trois cavités 42 dans chaque ensemble de moulage, on obtient deux configurations différentes pour chaque moule 44, 46, en fonction des deux cavités contiguës 42 qui sont sélectionnées. On comprendra que chaque ensemble de moule peut être soulevé et abaissé par translation par rapport aux figures 2C et 2D, et peut être également translatable dans les directions de gauche et de droite par rapport aux figures 2A à 2D pour la sélection de deux des trois cavités devant être remplies.

En référence à la figure 3, les cavités de moule 42 de six ensembles de moules individuels 12 pour une batterie 48 de six cellules sont représentées comme comprenant des cavités pour à la fois un plot formant borne négative 51, une barrette négative 52 et une barrette positive 53 d'une première cellule, une barrette positive 54 et une barrette négative 55 d'une seconde cellule, une barrette négative 56 et une barrette positive 57 d'une troisième cellule, une barrette positive 58 et une barrette négative 59 d'une quatrième cellule, une barrette positive 61 et une barrette négative 62 d'une cinquième cellule, une barrette positive 63 et une barrette négative 64 d'une sixième cellule, ainsi qu'un plot formant borne positive 65. Les cavités pour les plots formant bornes 51 et 65 sont réalisées d'un seul tenant avec les cavités pour les barrettes de connexion 52 et 63 ayant la polarité appropriée des première et sixième cellules. Toutes les autres cavités pour barrette de connexion incluent une cavité 66 pour plot de connexion entre cellules, adjacente à une cavité similaire de la barrette ayant la polarité opposée de la cellule suivante, ce qui a pour effet que la connexion de plots de connexion adjacents connectent les cellules de la batterie électriquement en série. La cavité 66 pour plot de connexion entre cellules forme par moulage une bride 68 en forme de U qui s'étend essentiellement perpendiculairement à partir d'une extrémité de chaque barrette moulée 53 à 59, 61, 62 et 64. La bride en forme de U 68 est suffisamment longue pour s'étendre dans des fentes formées dans un capot intérieur ou une paroi de séparation (non représentés) à l'intérieur d'un boîtier de batterie (non représenté) pour la liaison électrique de barrettes contiguës ayant une polarité opposée, par exemple par soudage.

En référence aux figures 2A à 2D et 3, on notera que six cellules formant la batterie 48 sur la figure 3 incluent trois cellules formées en utilisant l'ensemble de moule 44, les trois autres cellules étant formées en utilisant l'ensemble de moule 46. De façon plus spécifique, la première cellule, référencée 1, de la batterie 48 est formée par injection dans les deux cavités les plus à gauche de l'ensemble de moule 44 sur la figure 2A, ce qui conduit à la formation du plot formant borne négative 51, de la barrette négative 52 et de la barrette positive 53 de la première cellule. La seconde cellule, référencée 2, est formée par injection dans les deux cavités 42 les plus à droite de l'ensemble de moule 44 sur la figure 2A, avec la formation d'une barrette positive 54 et d'une barrette négative 55 pour la seconde cellule. La troisième cellule, référencée 3, est formée par injection des deux cavités 42 les plus à droite de l'ensemble de moule 46 sur la figure 2B, ce qui conduit à la formation de la barrette négative 56 et de la barrette positive 57. La quatrième cellule, référencée 4, est formée par injection dans les deux cavités 42 les plus à droite de l'ensemble de moule 42 sur la figure 2A avec formation de la barrette positive 58 et de la barrette négative 59. La cinquième cellule, référencée 5, est formée par injection dans les deux cavités 42 les plus à droite de l'ensemble de moule 46 sur la figure 2B, ce qui conduit à la formation de la barrette négative 61 et de la barrette positive 62. La sixième cellule, référencée 6, est formée par injection dans les deux cavités 42 les plus à gauche de l'ensemble de moule 46 sur la figure 2B, avec formation de la barrette positive 63, de la barrette négative 64 et du plot formant borne positive 65. En translatant les ensembles de moules 44, 46 vers la droite et vers la gauche, on peut sélectionner deux des trois cavités 42 pour injecter du plomb fondu de manière à obtenir la configuration barrette/plot désirée pour chaque cellule de la batterie 48.

En se référant à nouveau aux figures 2A à 2D, les ensembles de moule 12 comprennent en outre des bossages d'extrémité 69, 71, des extrémités 72 et 73 et des côtés 74 et 75. Une cavité de montage 77 est prévue dans chacun des bossages de manière à permettre le serrage de l'ensemble de moulage dans le poste de coulée 14 à l'aide de moyens non représentés.

Une fois que le remplissage est terminé, par exemple par détermination par une horloge réglée sur le débit de l'écoulement du métal fondu, le métal fondu se solidifie dans les cavités présélectionnées et réunit mécaniquement et électriquement les barrettes isolées à des pattes correspondantes. L'unité de cellule résultante est extraite de l'ensemble de moule 12 et est transférée pour un traitement ultérieur. Les unités de cellules sont disposées dans un boîtier de batterie à 12 V avec les brides 68 alignées avec des trous ménagés dans les cloisons de séparation des cellules à l'intérieur du boîtier de la batterie. Les brides contiguës 68 sont ensuite connectées électriquement, par exemple par soudage, pour achever la connexion en série des cellules adjacentes.

En se référant maintenant aux figures 1 à 3, on va décrire un exemple de procédé de fabrication d'une batterie d'accumulateur à six cellules en utilisant les ensembles de moules 44 et 46. Dans un premier cycle, le poste de moulage 26 est équipé du moule 44, tandis que le poste de moulage 28 reçoit le moule 46 pour le moulage simultané des cellules référencées 1 et 6 comportant des bornes formées de plots respectivement 51 et 65. Les cellules référencées 1 et 6 (voir figure 3) sont produites par injection de plomb dans les deux cavités les plus à gauche des moules 44 et 46 lors d'un premier cycle. Lors de second et troisième cycles, l'injection est effectuée dans les moules 44 et 46 dans les deux cavités les plus à droite, pour produire les cellules référencées 2 à 5 de la batterie d'accumulateur à six cellules. Plus précisément, l'injection dans les deux cavités les plus à droite du moule 44 produit la configuration de barrettes nécessaire pour les cellules 2 et 4, alors que l'injection dans les deux cavités les plus à droite du moule 46 produit la configuration nécessaire pour les cellules 3 et 5. Après ces trois cycles utilisant les moules 44 et 46, six cellules sont produites ayant des configurations plots/barrettes coulées adaptées pour le positionnement dans un boîtier de batterie et pour la réunion mécanique et électrique des cellules contiguës par soudage des brides contiguës s'étendant à partir des barrettes. Ici on notera que le moule 44 produit deux configurations plots/barrettes, en fonction desquelles deux cavités 42 sont sélectionnées pour le remplissage par du plomb. On notera que les deux configurations obtenues à partir du moule 44 diffèrent des deux configurations fournies par le moule 46. Le moule 46 produit d'autres configurations plots/barrettes, en fonction desquelles deux cavités 42 sont sélectionnées pour le remplissage par du plomb.

Le spécialiste de la technique comprendra que le dispositif et le procédé décrits ci-dessus et destinés à être utilisés pour fabriquer des cellules d'une batterie de 12 V sont utilisés en variante pour la fabrication de cellules destinées à être utilisées dans une batterie de 36 V. Une batterie de 36 V inclut un carter de boîtier définissant une zone de réception qui est configurée de manière à recevoir et maintenir dix-huit cellules. Chaque cellule possède une pluralité de plaques positives possédant chacune une partie en forme de patte ou languette positive qui s'étend vers l'extérieur à partir de la périphérie de la plaque, une pluralité de plaques négatives dont chacune porte une partie en forme de patte ou languette négative s'étendant vers l'extérieur à partir de la périphérie de la plaque, un séparateur non conducteur étant disposé entre chaque plaque positive et chaque plaque négative adjacente. Les pattes ou languettes pour des plaques sont analogues aux pattes 34 des plaques de batterie 32 décrites précédemment en référence à la batterie de 12 V.

C'est pourquoi le procédé et le dispositif décrits précédemment permettent de couler des barrettes sur des cellules individuelles destinées à être utilisées dans une batterie, avec un moule qui est moins coûteux, tout en permettant d'utiliser une machine COS plus petite, étant donné que le moule est plus petit. En outre chaque moule fournit deux configurations destinées à être utilisées pour raccorder des pattes de cellules contiguës d'une batterie en fonction des cavités sélectionnées pour être remplies par du plomb fondu. Le procédé et le dispositif décrits précédemment fournissent une plus grande souplesse et permettent d'utiliser une seule machine COS pour mouler la totalité des cellules devant être utilisées dans une batterie. En utilisant deux machines COS en liaison avec deux moules, on peut obtenir un gain sur le temps de cycle.

Bien que l'on ait représenté et décrit des formes de réalisation préférées, différents changements et modifications peuvent être apportés sans sortir du cadre de l'invention.

## Revendications

1. Moule pour préparer des barrettes de connexion et des bornes d'extrémité pour des batteries au plomb, par remplissage du moule, qui possède des cavités (42) correspondant à une barrette de connexion et à une borne d'extrémité, avec du plomb fondu en une quantité suffisante pour remplir le moule, et par introduction à la fois du contenu du moule à partir du fond de celui-ci vers le haut, et de pattes (34) retournées de plaques de batterie (32) regroupées, de façon à réunir par fusion les pattes des plaques avec le contenu du moule avant solidification, lequel moule comporte un premier bloc de moule (44) comportant trois cavités de moule (42) alignées linéairement et débouchant sur une face supérieure du bloc, deux cavités présélectionnées parmi les trois cavités de moule étant alignées en translation de manière à être remplies par du plomb.

2. Moule selon la revendication 1, **caractérisé en ce que** les trois cavités (42) comprennent une première cavité pour barrette configurée de manière à former une première barrette, une seconde cavité pour barrette configurée de manière à former une seconde barrette et une troisième cavité pour borne en forme de plot configurée de manière à former une première borne en forme de plot.

3. Moule selon la revendication 2, **caractérisé en ce que** les première et seconde barrettes sont configurées de manière à comporter une languette de prolongement (68) s'étendant essentiellement perpendiculairement aux barrettes, la languette de prolongement de la première barrette s'étendant à partir d'un côté de barrette opposé à celui à partir duquel s'étend la languette de prolongement de la seconde barrette.

4. Moule selon la revendication 3, **caractérisé en ce que** les première et seconde barrettes sont contiguës dans le bloc de moule (44).

5. Moule selon la revendication 4, **caractérisé en ce qu'**il comporte en outre un second bloc de moule (46) comprenant trois cavités (42), qui comprennent une quatrième cavité pour barrette configurée de manière à former une troisième barrette, une cinquième cavité pour barrette configurée de manière à former une quatrième barrette et une sixième cavité pour borne en forme plot configurée de manière à former une seconde borne en forme de plot, les troisième et quatrième barrettes étant contiguës et comprenant chacune une languette de prolongement (68) suivant des orientations respectivement opposées pour les premier et second blocs de moule.

6. Moule selon la revendication 5, **caractérisé en ce que** lesdits premier et second blocs de moule (44, 46) fournissent quatre configurations différentes de connecteurs à barrette et à borne.

7. Moule selon la revendication 5 ou 6, **caractérisé en ce que** six éléments de cellule (1 à 6) sont fabriqués en trois cycles en utilisant les premier et second blocs de moule (44, 46) avec deux machines de moulage.

8. Moule selon l'une quelconque des revendications précédentes, **caractérisé en ce que** une source de plomb fondu est une machine d'injection de plomb.

9. Dispositif pour couler des éléments sur des plaques de batteries d'accumulation, **caractérisé en ce qu'**il comporte:
une source de plomb fondu,
un premier bloc de moule (44) comportant trois cavités de moule (42) alignées linéairement et débouchant sur une face supérieure du bloc, deux cavités sélectionnées parmi les trois cavités de moule étant remplies par du plomb,
des moyens pour translater le bloc de moule (44) de façon à aligner chacune des deux cavités présélectionnées avec la source de plomb fondu, et
des moyens pour amener le bloc de moule (44) à coopérer avec un groupe de plaques de batterie (32) pour immerger des pattes (34) du groupe dans les deux cavités présélectionnées.

10. Dispositif selon la revendication 9, **caractérisé en ce que** les trois cavités (42) comprennent une première cavité pour barrette configurée pour former une première barrette, une seconde cavité pour barrette configurée pour former une seconde barrette et une troisième cavité pour borne en forme de plot configurée de manière à former une première borne en forme de plot.

11. Dispositif selon la revendication 10, **caractérisé en ce que** lesdites première et seconde barrettes sont configurées de manière à comporter une languette de prolongement (68) qui s'étend essentiellement perpendiculairement à ces barrettes, la languette de prolongement de la première barrette s'étendant à partir d'une extrémité de barrette opposée à celle à partir de laquelle s'étend la languette de prolongement de la seconde barrette.

12. Dispositif selon la revendication 11, **caractérisé en ce que** les première et seconde barrettes sont contiguës dans le bloc de moule (44).

13. Dispositif selon la revendication 12, **caractérisé en ce qu'**il comporte un second bloc de moule (46) comprenant trois cavités (42) qui comportent une quatrième cavité pour barrette configurée de manière à former une troisième barrette, une cinquième cavité pour barrette configurée de manière à former une quatrième barrette et une sixième cavité pour borne en forme de plot configurée de manière à former une seconde borne en forme de plot, les troisième et quatrième barrettes étant contiguës et comprenant chacune une languette de prolongement (68) suivant des orientations respectivement opposées pour les premier et second blocs de moule.

14. Dispositif selon la revendication 13, **caractérisé en ce que** lesdits premier et second blocs de moule (44, 46) forment quatre configurations différentes de connecteurs à barrette et à borne.

15. Dispositif selon la revendication 13 ou 14, comportant en outre deux machines de moulage, **caractérisé en ce que** six éléments de cellule (1 à 6) sont fabriqués en trois cycles en utilisant les premier et second blocs de moule (44, 46) avec les deux machines de moulage.

16. Dispositif selon l'une quelconque des revendications 9 à 15, **caractérisé en ce que** la source de plomb fondu est une machine d'injection de plomb.

17. Procédé pour couler des éléments sur des plaques de batteries d'accumulation, **caractérisé en ce qu'**il comporte des étapes consistant à
prévoir une source de plomb fondu,
recevoir un premier bloc de moule (44) comportant trois cavités de moule (42) alignées linéairement et débouchant sur une face supérieure du bloc, deux cavités sélectionnées parmi les trois cavités de moule étant remplies par du plomb,
translater le bloc de moule (44) pour aligner chacune des deux cavités présélectionnées avec la source de plomb fondu, et
soulever le bloc du moule en direction d'un groupe de plaques de batterie (32) pour immerger des pattes (34) du groupe dans les deux cavités présélection nées.

18. Procédé selon la revendication 17, **caractérisé en ce que** les trois cavités (42) comprennent une première cavité pour barrette configurée de manière à former une première barrette, une seconde cavité pour barrette configurée de manière à former une seconde barrette et une troisième cavité pour borne en forme de plot configurée de manière à former une première borne en forme de plot.

19. Procédé selon la revendication 18, **caractérisé en ce que** les première et seconde barrettes comporte une languette de prolongement (68) qui s'étend essentiellement perpendiculairement à ces barrettes, la languette de prolongement de la première barrette s'étendant à partir d'une extrémité de barrette opposée à celle à partir de laquelle s'étend la languette de prolongement de la seconde barrette.

20. Procédé selon la revendication 19, **caractérisé en ce que** des première et seconde barrettes sont contiguës dans le bloc de moule (44).

21. Procédé selon la revendication 20, **caractérisé en ce qu'**il comporte en outre un second bloc de moule (46) comprenant trois cavités (42) qui comportent une quatrième cavité pour barrette configurée de manière à former une troisième barrette, une cinquième cavité pour barrette configurée de manière à former une quatrième barrette et une sixième cavité pour borne en forme plot configurée de manière à former une seconde borne en forme de plot, les troisième et quatrième barrettes étant contiguës et chaque barrette comprenant une languette de prolongement (68) suivant des orientations respectivement opposées pour les premier et second blocs de moule.

22. Procédé selon la revendication 21, **caractérisé en ce que** lesdits premier et second blocs de moule (44, 46) forment quatre configurations différentes de connecteurs à barrette et à borne.

23. Procédé selon la revendication 21 ou 22, **caractérisé en ce qu'**il comprend en outre une étape d'utilisation des premier et second blocs de moule (44, 46) avec deux machines de moulage, six éléments de cellule étant fabriqués en trois cycles.

24. Procédé selon l'une quelconque des revendications 17 à 23, **caractérisé en ce que** la source de plomb fondu est une machine d'injection de plomb.

25. Procédé selon la revendication 23, **caractérisé en ce que** les éléments de cellule produits sont disposés dans un boîtier de batterie, dans lequel chaque languette de prolongement (68) est alignée avec des trous formés dans des parois de séparation des cellules à l'intérieur du boîtier de la batterie, chaque languette de prolongement étant alignée avec une autre languette de prolongement d'une cellule contiguë pour réunir électriquement les languettes s'étendant au niveau des cellules contiguës de manière à former une connexion en série entre les cellules de la batterie.
